# FASCICULE DE BREVET EUROPEEN

(11) **EP 0 654 444 B1**
(45) Date de publication et mention de la délivrance du brevet: **10.02.1999**
(21) Numéro de dépôt: 93870219.8
(22) Date de dépôt: 18.11.1993
(51) Int. Cl.: C01F 5/30, C01G 23/00, C08F 4/02, B01J 12/00

(54) **Procédé de production de poudre de chlorure de magnésium**
Verfahren zur Herstellung von Magnesium-Chlorid-Pulver
Process for the production of magnesium chloride powder

(43) Date de publication de la demande: 24.05.1995
(73) Titulaire: FINA RESEARCH S.A., B-7181 Seneffe (Feluy) (BE)
(72) Inventeur: Bracke, William, B-1881 Merchtem (BE); Debras Guy, B-6310 Les Bons Villers (BE)

(56) Documents cités:
- DE-A- 2 217 951
- US-A- 4 650 778
- INSTRUMENTS AND EXPERIMENTAL TECHNIQUES vol. 29, no. 5 , Octobre 1986 , NEW YORK US pages 1229 - 1231 EMEL'YANOV 'PLASMA GENERATOR OF ULTRASMALL PARTICLES'

## Description

La présente invention concerne un procédé de production de poudre de chlorure de magnesium, plus particulièrement de poudre de chlorure de magnésium recouverte de chlorure de titane.

La poudre de chlorure de magnésium (MgCl₂) recouverte de chlorure de titane (TiCl₄) est un produit de départ bien connu de catalyseurs de type Ziegler-Natta. Le rendement de ces catalyseurs dépend entre autres de la taille des particules de ce produit de départ; il est d'autant plus grand que ces particules sont fines. Il existe donc un besoin pour un procédé amélioré de production de poudres, plus particulièrement de poudre de MgCl₂ recouverte de TiCl₄, permettant d'obtenir une granulométrie très fine. En effet, il est particulièrement difficile d'obtenir une granulométrie très fine en broyant du MgCl₂ dans des conditions anhydres, alors que cette finesse est souhaitée lorsque MgCl₂ est utilisé dans la préparation de catalyseurs.

Un objet de la présente invention est de fournir un procédé amélioré de production de poudre de MgCl₂ ayant une granulométrie très fine, en particulier de poudre de MgCl₂ recouverte de TiCl₄.

Un autre objet de l'invention est de fournir une poudre de MgCl₂ éventuellement recouverte de TiCl₄, et ayant une granulométrie très fine.

Un autre objet de l'invention est de fournir une poudre de MgCl₂, éventuellement recouverte de TiCl₄, de granulométrie très fine et elle-même recouverte d'un donneur d'électrons.

Le procédé de l'invention consiste essentiellement à introduire de la poudre grossière de MgCl₂ dans une torche à plasma et à récupérer une poudre de MgCl₂ de granulométrie très fine après refroidissement.

On utilise de préférence une torche à plasma, mais on peut également utiliser tout autre plasma dans lequel la poudre grossière de MgCl₂ peut être introduite et une poudre de granulométrie très fine récupérée après refroidissement.

La poudre grossière de MgCl₂ peut être introduite dans le plasma par tout moyen approprié, de préférence dans un courant de gaz porteur inerte comme l'azote ou l'argon. Le débit de poudre est assuré par un système distributeur, à une valeur dépendant de la puissance du générateur de plasma (d'autant plus élevée que la puissance est élevée).

Sans vouloir se lier par une théorie, on peut dire que la poudre grossière de MgCl₂ est vaporisée dans le plasma, et les vapeurs sont condensées. On effectue de préférence la condensation sur les parois froides d'un système de trempe.

On ajuste les différents paramètres, en particulier la température du plasma, le temps de séjour du plasma, le débit de poudre de MgCl₂, le débit de gaz porteur, de manière à obtenir la granulométrie la plus fine possible. On utilise de préférence le procédé en continu.

Bien que l'on puisse recouvrir la fine poudre de MgCl₂ obtenue par le procédé de l'invention avec du tétrachlorure de titane dans une étape ultérieure, il est préférable de pouvoir obtenir de la poudre de MgCl₂ recouverte de TiCl₄ en une seule étape. Pour ce faire, on peut introduire du tétrachlorure de titane dans le plasma en même temps que la poudre grossière de MgCl₂. Bien qu'il soit possible d'introduire les deux composés déjà mélangés dans le plasma, il est préférable, vu qu'ils sont sous formes solide (MgCl₂) et liquide (TiCl₄), de les introduire à l'aide de systèmes différents.

Dans toute la présente description, les matériaux obtenus au départ de deux composés ou plus sont décrits sous le nom de poudre recouverte, mais ce terme doit être compris comme englobant tout matériau obtenu selon la présente invention, qu'il s'agisse d'un authentique mélange, d'une poudre recouverte ou d'une forme hybride.

Les particules obtenues par le procédé de l'invention ont une granulométrie très fine; elles sont recueillies par tout moyen approprié, généralement par dépôt sur les parois froides d'un système de trempe et/ou par filtration du courant de gaz porteur refroidi. Pour de nombreuses utilisations, et en particulier lorsqu' il s'agit de produits de départ pour catalyseurs de type Ziegler-Natta, la poudre très fine doit être conservée à l'abri de l'humidité, et on la plonge donc généralement dans un solvent tel que l'heptane.

Selon un mode d'exécution de l'invention, on peut vaporiser un donneur d'électrons et mettre cette vapeur en contact avec la poudre de granulométrie très fine lors du refroidissement de celle-ci, de manière à recouvrir cette poudre de donneur d'électrons. Ces donneurs d'électrons sont bien connus dans l'art de la catalyse Ziegler-Natta, et il n'est pas nécessaire de les décrire ici. A titre d'exemples, on peut citer les benzoates (en particulier le benzoate d'éthyle) et les phtalates (en particulier le di-butyl phtalate).

L'invention est maintenant illustrée à l'aide de l'exemple suivant.

### Exemple 1

On a utilisé une torche à plasma d'une fréquence de 40,7 MHz, développant une puissance de 1,2 kW au sein du plasma.

Le gaz alimentant le plasma était de l'argon, introduit avec un débit de 15 l/min.

On a introduit dans le plasma :
- d'une part du chlorure de magnésium commercial anhydre en poudre d'une granulométrie comprise entre 0,04 et 0,25 mm, véhiculé par l'argon, à raison de 1 kg/h, et
- d'autre part, du tétrachlorure de titane, liquide, pompé avec un débit de 400 g/h.

La poudre ainsi obtenue avait une granulométrie comprise entre 5 et 500 nm.

## Revendications

1. Procédé de production de poudre de chlorure de magnésium, caractérisé en ce qu'il consiste essentiellement à introduire de la poudre grossière de chlorure de magnésium dans une torche à plasma et à récupérer une poudre de granulométrie très fine après refroidissement.

2. Procédé selon la revendication 1, caractérisé en ce que l'on introduit du chlorure de magnésium et du tétrachlorure de titane, dans la torche à plasma.

3. Procédé selon l'une des revendications 1 et 2, caractérisé en ce qu'on recouvre la poudre de granulométrie très fine avec un donneur d'électrons lors du refroidissement.

4. Poudre à granulométrie très fine pouvant être obtenue par le procédé de l'une quelconque des revendications 1 à 3.

## Claims

1. Process for the production of magnesium chloride powder, characterised in that it essentially consists of feeding coarse magnesium chloride powder into a plasma torch and recuperating a powder with a very fine granulometry after cooling.

2. Process according to Claim 1, characterised in that magnesium chloride and titanium tetrachloride are fed into the plasma torch.

3. Process according to one of Claims 1 and 2, characterised in that the powder with a very fine granulometry is coated with an electron donor during cooling.

4. Powder with a very fine granulometry which can be obtained by the process according to any one of Claims 1 to 3.

## Patentansprüche

1. Verfahren zur Herstellung von Magnesiumchloridpulver, dadurch gekennzeichnet, daß es im wesentlichen darin besteht, grobes Magnesiumchloridpulver in einen Plasmabrenner einzuführen und ein Pulver mit sehr feiner Granulometrie nach Abkühlung zu gewinnen.

2. Verfahren nach Anspruch 1, dadurch gekennzeichnet, daß man Magnesiumchlorid und Titantetrachlorid in den Plasmabrenner einführt.

3. Verfahren nach einem der Ansprüche 1 und 2, dadurch gekennzeichnet, daß man das Pulver von sehr feiner Granulometrie mit einem Elektronendonator während der Abkühlung überzieht.

4. Pulver mit sehr feiner Granulomtrie, das erhalten werden kann mithilfe des Verfahrens nach einem der Ansprüche 1 bis 3.
